# DEMANDE DE BREVET EUROPEEN

(11) **EP 4 120 091 A1**
(43) Date de publication de la demande: **18.01.2023**
(21) Numéro de dépôt: 22183400.5
(22) Date de dépôt: 06.07.2022
(51) Int. Cl.: G06F 12/14, G06F 9/46, G06F 21/60, G06F 21/53, G06F 9/50, G06F 21/71

(54) **PROCÉDÉ DE GESTION DE DROITS D ACCÈS DE TÂCHES LOGICIELLES EXÉCUTÉES PAR UN MICROCONTRÔLEUR, ET MICROCONTRÔLEUR CORRESPONDANT**

(30) Priorité: 16.07.2021 FR 2107717
(71) Demandeur: STMicroelectronics (Grand Ouest) SAS, 72100 Le Mans (FR)
(72) Inventeur: JAOUEN, Michel, 72530 YVRE L'EVEQUE (FR); PALLARDY, Loic, 72700 ROUILLON (FR)
(74) Mandataire: Casalonga

(57) **Abrégé**

Le procédé de gestion de droits d'accès de tâches logicielles (Tsk_A, Tsk_B, Tsk_C) exécutées par une unité de traitement (CPU) utilisant une mémoire cache (CCH) pour contenir des données d'exécution desdites tâches dans des emplacements mémoire ayant chacun un attribut (P, NP ; S, NS) représentatif du niveau de droit d'accès (Priv, NPriv ; Sec, NSec) de la tâche respective, comprend, en cas de modification des droits d'accès (Priv, NPriv ; Sec, NSec) d'au moins une tâche (Tsk_B), un processus d'actualisation des droits (220 ; 320 ; 400) comprenant une modification des attributs (P, NP ; S, NS) des emplacements de la mémoire cache (CCH) contenant des données d'exécution relatives à ladite au moins une tâche (Tsk_B) et une conservation des données d'exécution contenues dans lesdits emplacements de la mémoire cache (CCH).

## Description

Des modes de réalisation et de mise en œuvre concernent les circuits intégrés de microcontrôleur ou de microprocesseur, en particulier la gestion des droits d'accès de tâches logicielles exécutées par des microcontrôleurs ou des microprocesseurs.

Les droits d'accès des tâches logicielles sont typiquement prévus pour des raisons de sécurité lorsqu'un système d'exploitation sécurisé planifie une tâche consommant une tranche de mémoire occupée par une autre tâche.

Les enchainements de tâches s'exécutant ayant des droits d'accès hiérarchiquement plus élevés peuvent utiliser des tranches de mémoire des enchainements de tâches ayant des droits d'accès hiérarchiquement plus faibles.

La mémoire est mappée uniquement pour interdire aux tâches ayant des droits d'accès inférieurs d'accéder aux tranches de mémoire réservées à des droits d'accès hiérarchiquement supérieurs pendant que tâches ayant des droits d'accès supérieurs utilisent ces tranches de mémoire.

Lorsque ces tranches de mémoire sont « cachable », c'est-à-dire qu'il est possible de les précharger dans une mémoire cache qui est une mémoire intermédiaire de travail à accès rapide, avant d'être utilisées par le processeur, il est classiquement nécessaire de vider les lignes de cache contenant ces tranches de mémoire pour définir de nouveaux droits d'accès pour ces tranches de mémoire.

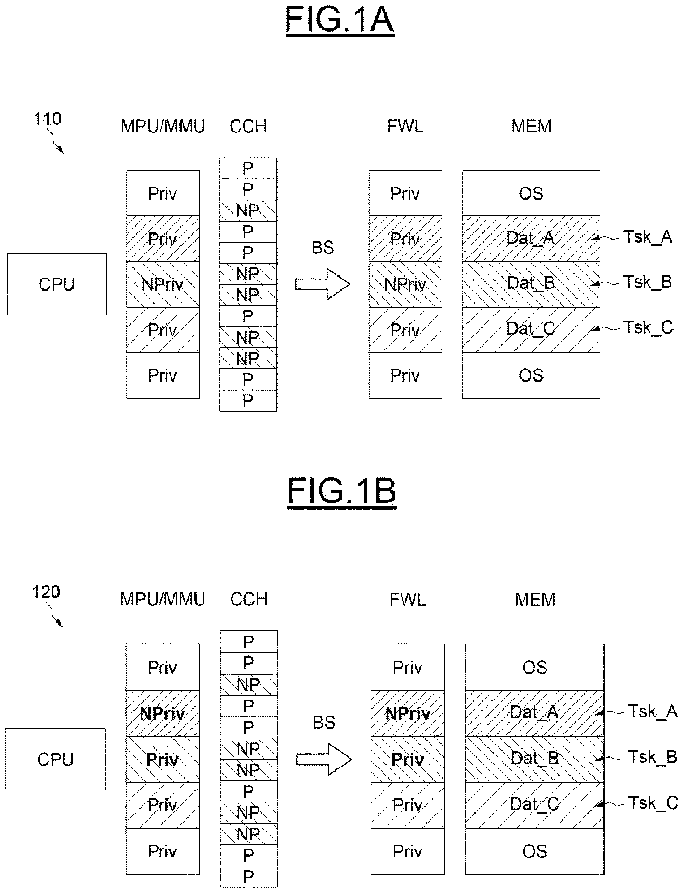

On se réfère à cet égard aux figures 1A et 1B.

La figure 1A représente un état 110 des droits d'accès d'un exemple de microcontrôleur. Les droits d'accès sont gérés par une unité de traitement (ou « processeur ») CPU et par une unité de protection de mémoire MPU/MMU, qui définissent un droit d'accès inférieur « non-privilégié » NPriv à la tâche active (dans l'état 110, la tâche active est la tâche Tsk_B), afin de garantir que la tâche active Tsk_B ne pourra pas accéder au code et aux données des autres tâches Tsk_A, Tsk_C, qui sont attribuées d'un droit d'accès « privilégié » Priv.

En effet, en plus du processeur CPU et de l'unité de protection de mémoire MPU/MMU, un pare-feu matériel FWL contrôle et protège l'accès aux différentes régions OS, Dat_A, Dat_B, Dat_C de la mémoire MEM. Le pare feu FWL permet en outre de contrôler et protéger des accès aux différentes régions de mémoire par différents périphériques pilotés par les tâches exécutées.

Le pare-feu FWL peut être dynamiquement programmé de manière à suivre la programmation des droits d'accès Priv, NPriv des tâches exécutées. Ce type de pare-feu dynamique permet notamment d'empêcher l'accès à des données Dat_A de la mémoire MEM relatives à l'une des tâches (par exemple la tâche Tsk_A, dont le code programme peut être la propriété d'un tiers), par une autre tâche lors de son exécution (par exemple la tâche Tsk_B dont le code programme peut être la propriété d'un autre tiers).

Dans cet état 110, seule la tâche B a été exécutée. La mémoire cache CCH ne contient que le code et les données de la tâche Tsk_B, et aussi du système d'exploitation OS.

La figure 1B représente un état 120 dans lequel les droits d'accès de l'état 110 ont été modifiés, de sorte que la tâche Tsk_A est devenu la tâche active.

Ainsi, la tâche Tsk_A est attribuée d'un droit d'accès « non-privilégié » NPriv, tandis que la tâche Tsk_B est attribuée d'un droit d'accès « privilégié » Priv.

L'unité de protection de mémoire MPU/MMU et le pare-feu FWL sont reconfigurés suivant cette modification.

Cela étant, les lignes de cache qui contiennent des informations sur la tâche B sont toujours marquées d'un attribut « non-privilégié » NP dans la mémoire cache.

En cas d'éviction d'une ligne de cache, c'est-à-dire lorsqu'une ligne de la mémoire cache allouée à la tâche précédemment active Tsk_B est réallouée à la tâche active courante Tsk_A, alors les données contenues dans cette ligne devraient être écrites dans la région Dat_B de la mémoire MEM réservée à la tâche précédemment active Tsk_B.

Or, le pare-feu FWL détecte un accès illégal et bloque l'accès en écriture de la ligne de mémoire cache ayant un attribut NP (non-priviligié) étant donné que les droits d'accès de la tâche Tsk_B sont devenus privilégiée Priv lors de l'exécution de la tâche Tsk_A.

Une solution actuelle est de vider la mémoire cache CCH avant chaque reconfiguration de l'unité de protection de mémoire MPU/MMU et du pare-feu FWL, ou bien de ne pas autoriser l'utilisation de la mémoire cache CCH pour les régions de mémoire MEM relatives à certaines tâches (par exemple la région Dat_B de la tâche Tsk_B).

Cela introduit dans les deux cas des dégradations des performances.

Une autre solution actuelle est de ne pas mapper exclusivement la région de mémoire MEM relative à une tâche (par exemple Tsk_B) avec un droit d'accès de niveau supérieur Priv, c'est-à-dire laisser, dans l'état 120, une partie de la région Dat_B de mémoire MEM relative à la tâche Tsk_B avec un droit d'accès de niveau inférieur NPriv.

Cela introduit une dégradation de la sécurité de l'isolation entre les tâches.

Une autre solution actuelle est de copier vers un emplacement mémoire ayant des droits d'accès supérieur P. On évite ainsi la nécessité de reconfigurer l'unité de protection MPU/MMU et du pare feu FWL, puis de recopier la mémoire d'accès supérieur P vers la mémoire de droits d'accès inférieur NP lorsque la tache TSK_B redevient active.

D'une part cette solution convient uniquement dans le cas d'une région de mémoire partagée entre une tâche sécurisée et une tache non-sécurisée. D'autre part, cette solution présente l'inconvénient d'utiliser une plus grande place dans la mémoire, étant donné qu'elle requiert plus de copies dans la mémoire. Augmenter la taille de mémoire est problématique en matière de coût et d'encombrement.

Ainsi, il existe un besoin de proposer des solutions à ces problèmes ne subissant pas ces inconvénients.

Des modes de mise en œuvre et de réalisation proposent une technique de gestion de droits d'accès de tâches logicielles permettant d'améliorer les performances du microcontrôleur, sans dégrader la sécurité obtenue par les droits d'accès, et sans introduire de coût ni d'encombrement matériel supplémentaires.

Selon un aspect, il est proposé un procédé de gestion de droits d'accès de tâches logicielles exécutées par une unité de traitement utilisant une mémoire cache pour contenir des données d'exécution desdites tâches dans des emplacements mémoire ayant chacun un attribut représentatif du niveau de droit d'accès de la tâche respective. Le procédé comprend, en cas de modification des droits d'accès d'au moins une tâche, un processus d'actualisation des droits mis en œuvre par l'unité de traitement, comprenant une modification des attributs des emplacements de la mémoire cache contenant des données d'exécution relatives à ladite au moins une tâche et une conservation des données d'exécution contenues dans lesdits emplacements de la mémoire cache.

Par exemple, les droits d'accès des tâches logicielles sont définis par une unité de gestion des droits d'accès.

En d'autres termes, le processus d'actualisation des droits d'accès dans la mémoire cache selon cet aspect permet de rapidement mettre en cohérence les données contenues dans la mémoire cache et les droits d'accès correspondant. Ainsi, il n'est pas nécessaire de mettre en œuvre les techniques classiques de vidage de la mémoire cache, de prévoir des droits d'accès inférieurs partiels, ni de mettre en œuvre des actions de copie multiples pour adapter la mémoire cache à la planification des tâches.

En conséquence, le fonctionnement du microcontrôleur est plus efficace et plus fiable. Par ailleurs, l'actualisation des droits d'accès dans la mémoire cache consomme peu de ressource et présente une consommation énergétique économique.

Selon un mode de mise en œuvre, un mécanisme de pare-feu contrôle un accès à une mémoire contenant des données relatives aux tâches logicielles de façon conditionnée sur les droits d'accès desdites tâches logicielles, le procédé comprenant, en cas de modification des droits d'accès d'au moins une tâche, une modification des conditions de l'accès aux données relatives à ladite au moins une tâches suivant ladite modification des droits d'accès.

Par exemple, la mémoire peut être une mémoire externe ou interne au circuit intégré de microcontrôleur, du type mémoire vive (telle qu'une mémoire « RAM » pour « Random Accès Memory ») ou du type non-volatile (telle qu'une mémoire « Flash »).

Cela correspond à un mécanisme de pare-feu dynamique permettant notamment de protéger des données de la mémoire MEM relatives à une tâche, lors de l'exécution d'une autre tâche.

Le processus d'actualisation des droits d'accès dans la mémoire cache selon cet aspect permet une utilisation optimale du pare-feu dynamique, les données contenues dans la mémoire cache ne subissant pas le problème d'accès illégal à la mémoire en cas d'éviction de ligne.

Selon un mode de mise en œuvre, les droits d'accès des tâches logicielles comprennent un niveau privilégié et un niveau non-privilégié, de sorte qu'une tâche de niveau non-privilégié ne peut pas accéder à des données ou des fonctions de niveau privilégié.

La gestion des droits d'accès de niveau privilégié et de niveau non-privilégié permet notamment de donner l'accès et d'empêcher l'accès à des fonctions sensibles du microcontrôleur, par exemple des fonctions de programmation de commandes du microcontrôleur, telles que la configuration du microcontrôleur au démarrage (usuellement « boot » en anglais) ou la programmation des droits d'accès. Certaines ressources matérielles, telles que des registres de piles, peuvent être dupliquée dans les domaines respectivement privilégiés et non-privilégiés.

Selon un mode de mise en œuvre, les droits d'accès des tâches logicielles comprennent un niveau sécurisé et un niveau non-sécurisé, de sorte qu'une tâche de niveau non-sécurisé ne peut pas accéder à des données ou des fonctions respectivement contenues ou mises en œuvre par un élément matériel de niveau sécurisé.

La gestion des droits d'accès de niveau sécurisé et de niveau non-sécurisé correspond généralement à une séparation physique d'éléments matériels sécurisés et non-sécurisés. Les éléments sécurisés sont généralement prévus pour mettre en œuvre des fonctions critiques de sécurité, telles que les chiffrement/déchiffrement accédant à des clés secrètes. La gestion des droits d'accès selon cet aspect permet de passer d'un mode à l'autre (mode sécurisé et mode non-sécurisé) plus rapidement, avec moins de sauvegardes de la mémoire cache vers une autre mémoire.

Selon un mode de mise en œuvre, le processus d'actualisation des droits comprend en outre un verrouillage des emplacements de la mémoire cache contenant les données d'exécution relatives à ladite au moins une tâche, avant ladite modification des attributs respectifs, et un déverrouillage après ladite modification des attributs.

Le verrouillage des emplacements de la mémoire cache correspond à une interdiction de modifier ces emplacements mémoire. Ainsi, même si aucune exécution d'une autre tâche ne vient à modifier les emplacements de la mémoire cache au cours du processus, et même si les interruptions de l'unité de traitement sont désactivées pendant le processus, la mise en œuvre du processus lui-même pourrait engendrer des évictions desdits emplacements mémoire, qui sont protégés à cet égard par le verrouillage.

Selon un mode de mise en œuvre, le processus d'actualisation des droits comprend en outre une désactivation des interruptions de l'unité de traitement pendant tout le processus d'actualisation.

En effet, des interruptions de l'unité de traitement, qui sont typiquement des tâches à traiter en priorité, pourraient modifier et commander des évictions des emplacements mémoire au cours du processus. Il est tolérable de désactiver les interruptions pendant tout le processus, étant donné sa simplicité de mise en œuvre et donc sa rapidité d'exécution.

Selon un mode de mise en œuvre, le processus d'actualisation des droits ne peut être commandé que par une tâche, exécutée par l'unité de traitement, ayant un niveau de droit d'accès hiérarchiquement supérieur ou égal au niveau de droit d'accès représenté par l'attribut modifié.

Selon un autre aspect, il est également proposé un circuit intégré, tel qu'un microcontrôleur ou un microprocesseur, comportant une unité de traitement configurée pour exécuter des tâches logicielles, une mémoire cache configurée pour contenir des données d'exécution desdites tâches logicielles dans des emplacements mémoire ayant chacun un attribut représentatif d'un niveau de droit d'accès de la tâche respective, et une unité de gestion de droits d'accès configurée, en cas de modification des droits d'accès d'au moins une tâche, pour modifier les attributs des emplacements de la mémoire cache contenant des données d'exécution relatives à ladite au moins une tâche, et pour conserver les données d'exécution contenues dans ces emplacements de la mémoire cache.

Selon un mode de réalisation, l'unité de gestion de droits d'accès est configurée pour définir les droits d'accès des tâches logicielles.

Selon un mode de réalisation, le circuit intégré est apte à coopérer avec un mécanisme de pare-feu configuré pour contrôler un accès à une mémoire destinée à contenir des données relatives aux tâches logicielles, de façon conditionnée sur les droits d'accès desdites tâches logicielles, l'unité de traitement étant configurée, en cas de modification des droits d'accès d'au moins une tâche, pour modifier les conditions de l'accès aux données relatives à ladite au moins une tâche du mécanisme de pare-feu, suivant ladite modification.

La mémoire et le mécanisme de pare-feu peuvent être externes ou internes au circuit intégré de microcontrôleur/microprocesseur, néanmoins, l'unité de traitement est capable dans les deux cas de modifier (reprogrammer) les conditions d'accès en mémoire dudit mécanisme de pare-feu.

Selon un mode de réalisation, les droits d'accès des tâches logicielles comprennent un niveau privilégié et un niveau non-privilégié, l'unité de gestion de droits d'accès étant configurée de sorte qu'une tâche de niveau non-privilégié ne peut pas accéder à des données ou des fonctions de niveau privilégié.

Selon un mode de réalisation, des éléments matériels de niveau sécurisé et des éléments matériels de niveau non-sécurisé, dans lequel les droits d'accès des tâches logicielles comprennent un niveau sécurisé et un niveau non-sécurisé, et l'unité de gestion de droits d'accès est configurée de sorte qu'une tâche de niveau non-sécurisé ne peut pas accéder à des données ou des fonctions respectivement contenues ou mises en œuvre par un élément matériel de niveau sécurisé.

Selon un mode de réalisation, l'unité de gestion de droits d'accès est en outre configurée pour verrouiller les emplacements de la mémoire cache contenant les données d'exécution relatives à ladite au moins une tâche, avant ladite modification des attributs respectifs, et pour les déverrouiller après ladite modification des attributs.

Selon un mode de réalisation, l'unité de gestion de droits d'accès est en outre configurée pour désactiver les interruptions de l'unité de traitement pendant la modification des attributs des emplacements de la mémoire cache.

Selon un mode de réalisation, l'unité de traitement est configurée de sorte que ladite modification des droits d'accès d'au moins une tâche, ne peut être commandée que par une tâche, exécutée par l'unité de traitement, ayant un niveau de droit d'accès hiérarchiquement supérieur ou égal au niveau de droit d'accès représenté par l'attribut modifié.

Selon un autre aspect, il est également proposé un processus d'actualisation d'au moins un attribut représentatif d'un niveau de droit d'accès d'un contenu d'un emplacement mémoire respectif d'une mémoire cache, comprenant, sur commande d'une unité de traitement, une modification d'au moins un attribut, sans modifier le contenu de l'emplacement mémoire correspondant.

Selon un autre aspect, il est proposé un dispositif de mémoire cache, destiné être commandé par une unité de traitement, comprenant des emplacements mémoire configurés pour avoir chacun un attribut représentatif d'un niveau de droit d'accès du contenu de l'emplacement mémoire respectif, la mémoire cache étant capable, sur commande de l'unité de traitement, d'effectuer une modification d'au moins un attribut sans modifier le contenu de l'emplacement mémoire correspondant.

D'autres avantages et caractéristiques de l'invention apparaîtront à l'examen de la description détaillée de modes de réalisation et de mise en œuvre, nullement limitatifs, et des dessins annexés, sur lesquels :
[Fig 1A];
[Fig 1B] précédemment décrites, illustrent un problème pouvant être rencontré dans l'art antérieur ;
[Fig 2A];
[Fig 2B];
[Fig 2C];
[Fig 2D];
[Fig 3A];
[Fig 3B];

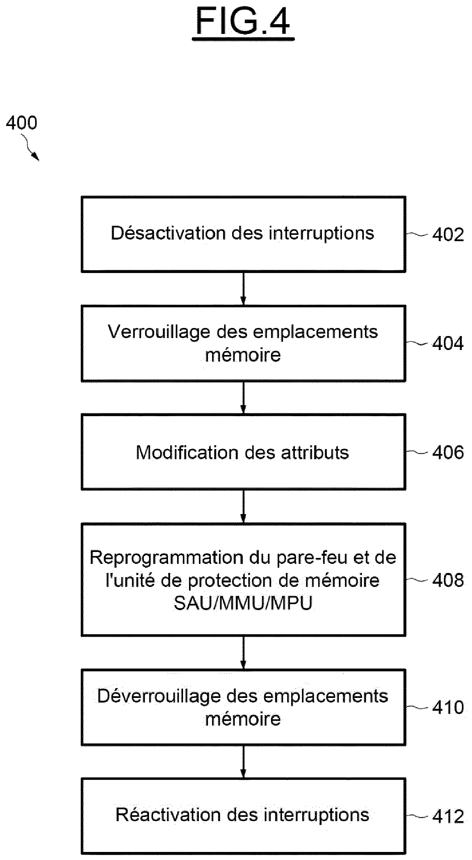

[Fig 4] illustrent des modes de réalisation et de mise en œuvre de l'invention.

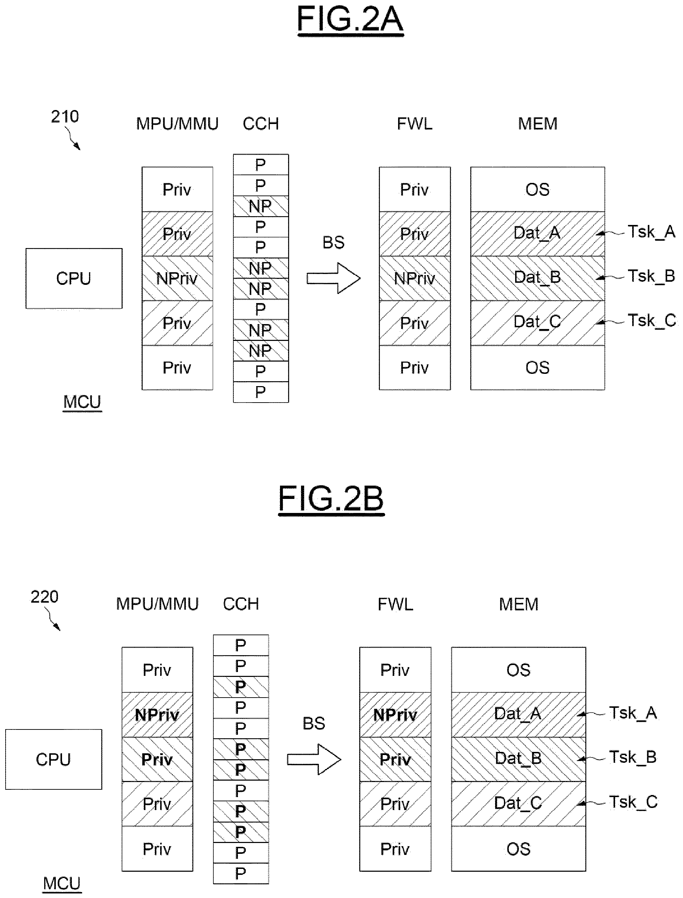

La figure 2A illustre un exemple de microcontrôleur MCU ou de microprocesseur, réalisé de façon intégrée dans un circuit intégré, dans un état donné 210 de son fonctionnement.

Le microcontrôleur MCU comporte une unité de traitement CPU, une unité de gestion des droits d'accès MPU/MMU, une mémoire cache CCH, ainsi qu'une mémoire MEM dont l'accès depuis un bus BS est contrôlé et conditionné par un mécanisme de pare-feu FWL.

L'unité de traitement CPU est configurée pour exécuter des tâches logicielles, par exemple d'une part l'exécution d'un système d'exploitation OS, et d'autre part des exécutions d'applications logicielles Tsk_A, Tsk_B, Tsk_C pouvant par exemple être des programmes appartenant à des tiers fournissant des services sur le microcontrôleur MCU.

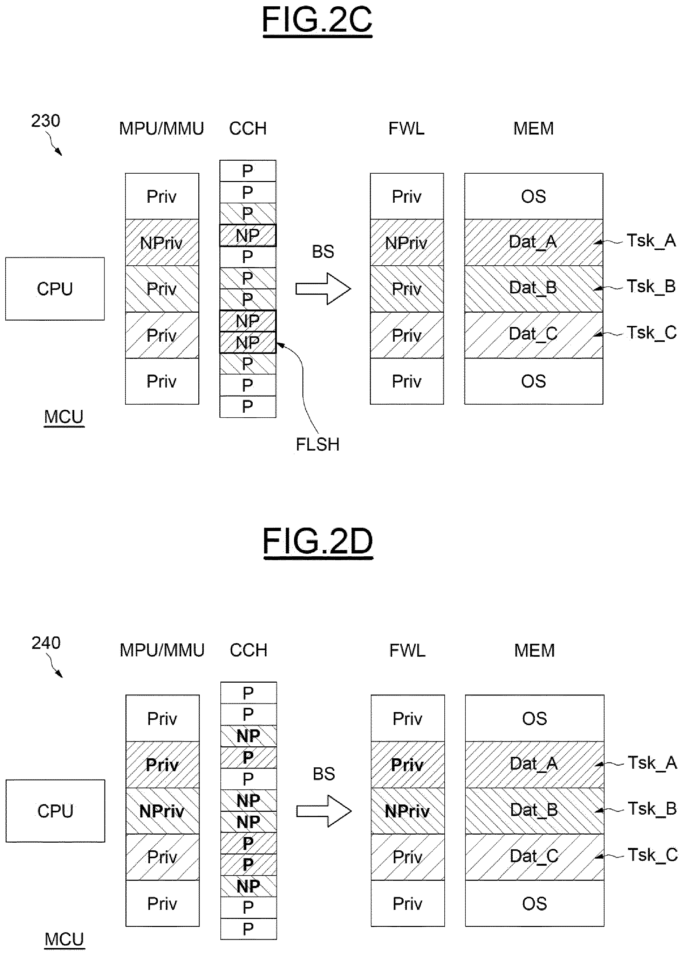

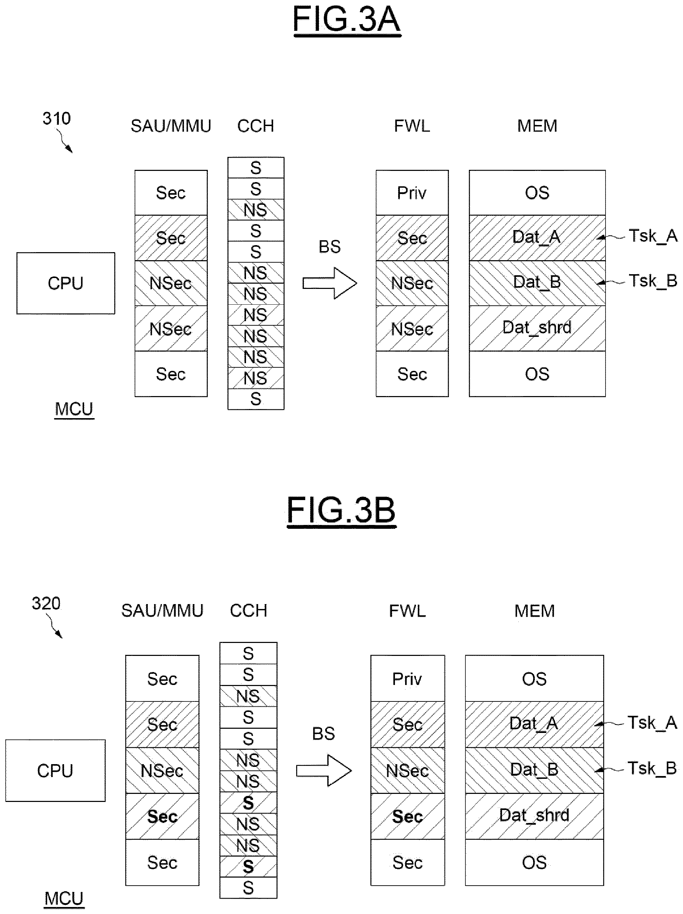

Pour la lecture des figures 2A, 2B, 2C et 2D, ainsi que les figures 3A et 3B, on notera que les éléments relatifs à la même tâche logicielle sont hachurés avec le même motif de hachure dans les différents composants du microcontrôleur MCU. C'est-à-dire en détails que les niveaux de droit d'accès de l'unité de gestion des droits d'accès MPU/MMU, les attributs des emplacements de la mémoire cache CCH, les conditions de contrôle du pare feu FWL et les données Dat_A, Dat_B, Dat_C, OS de la mémoire MEM qui sont relatifs à la même tâche logicielle « Tsk_A », « Tsk_B », Tsk_C », « OS » sont hachurés avec le même motif de hachure, soit : des hachures obliques montantes d'écart étroit pour la tâche Tsk_A, des hachures obliques descendantes d'écart moyen pour la tâche Tsk_B, des hachures obliques montantes d'écart large pour la tâche Tsk_C, et un motif vide pour la tâche OS.

L'unité de traitement CPU utilise une mémoire cache CCH, qui est une mémoire de travail utilisée pour stocker des données d'exécution des tâches, telles que des données intermédiaires de calculs, des variables internes, et aussi par exemple des données de sorties avant transfert vers un périphérique ou vers la mémoire MEM.

La mémoire cache CCH est matériellement proche du circuit de l'unité de traitement CPU et est cadencée par l'unité de traitement CPU, offrant à cet égard des performances optimales, mais est usuellement limitée en taille.

L'unité de gestion des droits d'accès MPU/MMU permet, sur commande de l'unité de traitement CPU, de définir un niveau de droit d'accès Priv, NPriv, des tâches logicielles exécutées. Le niveau de droit d'accès Priv, NPriv de chaque tâches est répertorié dans l'unité de gestion des droits d'accès MPU/MMU.

Par exemple, l'unité de gestion des droits d'accès MPU/MMU peut être une unité de protection de mémoire « MPU » (usuellement en anglais « Memory Protection Unit »), typiquement adaptée pour de microcontrôleurs MCU relativement simples. En alternative, comme illustré dans l'exemple des figures 3A et 3B, l'unité de gestion des droits d'accès MPU/MMU peut être une unité de gestion de mémoire (usuellement en anglais « Memory Management Unit »), typiquement adaptée lorsque le microcontrôleur est capable de gérer des adresses virtuelles, ou encore une unité d'attribution de sécurité (usuellement en anglais « Security Attribution Unit ») dans le cadre des droits d'accès de niveaux sécurisé et non-sécurisé (figures 3A, 3B).

Dans cet exemple, les droits d'accès ont un niveau privilégié Priv ou un niveau non-privilégié NPriv, et permettent notamment de donner l'accès ou respectivement d'empêcher l'accès à des fonctions sensibles du microcontrôleur MCU, par exemple des fonctions de programmation de commandes du microcontrôleur, telles que la programmation du microcontrôleur au démarrage (usuellement « boot » en anglais) ou la programmation de l'unité de gestion des droits d'accès MPU/MMU. Certaines ressources matérielles, telles que des registres de piles, peuvent être dupliquée dans des domaines matériels respectivement privilégiés et non-privilégiés.

Dans la mémoire cache CCH, les données d'exécution des tâches sont stockées dans des emplacements mémoire, chaque emplacement mémoire étant représenté par une ligne rectangulaire de la mémoire cache CCH. Chaque emplacement de la mémoire cache est dédié d'un attribut P, NP représentatif du niveau de droit d'accès de la tâche logicielle dont des données d'exécutions sont stockées dans l'emplacement mémoire respectif.

Les attributs P, NP des emplacements de la mémoire cache CCH peuvent par exemple être codés sur un bit. L'attribut P correspond au niveau privilégié Priv des droits d'accès, tandis que l'attribut NP correspond au niveau non-privilégié NPriv des droits d'accès.

En outre, les droits d'accès Priv, NPriv conditionnent l'accès à la mémoire MEM, par l'effet du mécanisme de pare-feu FWL.

La mémoire MEM est destinée à contenir des données Dat_A, Dat_B, Dat_C, OS relatives aux tâches logicielles Tsk_A, Tsk_B, Tsk_C, OS, par exemple les codes programmes des tâches logicielles, ou des données d'exécution desdites tâches. La mémoire MEM peut être une mémoire externe ou interne au circuit intégré de microcontrôleur MCU, du type mémoire vive, telle qu'une mémoire « RAM » pour « Random Acces Memory », ou du type non-volatile, telle qu'une mémoire « Flash ».

Le mécanisme de pare-feu FWL est configuré pour contrôler l'accès aux données Dat_A, Dat_B, Dat_C relatives aux tâches logicielles de la mémoire MEM, de manière conditionnée par les droits d'accès des tâches Tsk_A, Tsk_B, Tsk_C correspondant auxdites données. Les droits d'accès Priv, NPriv aux données de la mémoire MEM sont les mêmes que les droits d'accès définis dans l'unité de gestion des droits d'accès MPU/MMU pour des tâches correspondantes Tsk_A, Tsk_B, Tsk_C. Les conditions d'accès dans la mémoire sont notamment prévues de sorte qu'une tâche de niveau non-privilégié NPriv ne peut pas accéder à des données de niveau privilégié Priv.

A cet égard, en cas de modification des droits d'accès Priv, NPriv d'au moins une tâche, le mécanisme de pare-feu FWL est avantageusement capable de modifier la protection de l'accès à la mémoire MEM en accord avec ladite modification.

La gestion des droits d'accès est notamment prévue de sorte qu'une tâche de niveau non-privilégié NPriv ne peut pas accéder à des données ou des fonctions de niveau privilégié Priv.

En pratique, la tâche active, c'est-à-dire la tâche Tsk_B dans l'état 210, est placée au niveau de droit d'accès hiérarchiquement inférieur, c'est-à-dire le niveau non-privilégié NPriv, tandis que les tâches non-active, dans l'état 210 les tâches Tsk_A, Tsk_C, sont placées au niveau hiérarchiquement supérieur, c'est-à-dire le niveau privilégié. Ainsi, lors de son exécution, la tâche active Tsk_B ne peut pas accéder à des données Dat_A, Dat_C, OS de la mémoire MEM relatives à une autre tâche Tsk_A, Tsk_C, OS.

On se réfère désormais à la figure 2B.

La figure 2B illustre un état 220 du microcontrôleur MCU résultant d'un exemple de modification des droits d'accès de l'état 210 de la figure 2A. Les éléments modifiés dans l'état 220 sont représentés en caractère gras, par rapport à l'état 210.

Dans cet exemple la tâche Tsk_A est passé du niveau privilégié Priv au niveau non-privilégié NPriv, tandis que la tâche Tsk_B est passée du niveau non-privilégié NPriv au niveau privilégié Priv. Cela peut par exemple correspondre au cas où la tâche Tsk_A est devenue active, par exemple suite à une interruption reçue et traitée par l'unité de traitement CPU, ou bien en raison de priorités d'exécution telles que lorsque la tâche Tsk_A nécessite un traitement en temps réel.

Ainsi, les niveaux de droits d'accès des tâches ont été modifiés dans l'unité de gestion des droits d'accès MPU/MMU ainsi que les conditions d'accès à la mémoire contrôlées par le pare-feu FWL.

En outre, en cas de modification des droits d'accès des tâches Tsk_A, Tsk_B, l'unité de traitement CPU est configurée pour modifier les attributs P, NP des emplacements de la mémoire cache CCH contenant des données d'exécution relatives auxdites tâches modifiées.

Seuls les attributs P, NP des emplacements de la mémoire cache CCH sont modifiés, les données d'exécution contenues dans ces emplacements mémoire sont conservées.

Ainsi, dans l'état 220, les attributs des emplacements mémoire relatifs à la tâche Tsk_B correspondent au niveau privilégié P, et pourront éventuellement être transférés vers la mémoire MEM sans être bloqué par le mécanisme de pare-feu FW1 ayant la condition privilégié Priv pour la région Dat_B réservée à la tâche Tsk_B.

On se réfère à cet égard à la figure 2C.

La figure 2C illustre un état 230 du microcontrôleur MCU résultant de son fonctionnement à partir de l'état 220.

L'exécution de la tâche Tsk_A a généré des donnés d'exécutions dans des emplacements de la mémoire cache CCH, représentés par un cadre en trait épais, avec l'attribut NP correspondant au niveau non-privilégié NPriv de la tâche active Tsk_A.

L'utilisation de la mémoire cache CCH peut être faite naturellement et prévoir une éviction FLSH (usuellement « flush » en anglais) d'un emplacement mémoire précédemment utilisé par la tâche précédent Tsk_B. Etant donné que l'attribut de l'emplacement mémoire de l'éviction FLSH a été mis en cohérence avec les conditions du pare-feu FWL, les données d'exécutions contenues dans cet emplacement mémoire peuvent être sauvegardées dans la région Dat_B correspondantes de la mémoire MEM.

On se réfère désormais à la figure 2D.

La figure 2D illustre un état 240 du microcontrôleur MCU résultant d'un exemple de modification des droits d'accès de l'état 230 de la figure 2C. Les éléments modifiés dans l'état 240 sont représentés en caractère gras, par rapport à l'état 230.

Dans cet exemple la tâche Tsk_B est revenue au niveau non-privilégié NPriv, tandis que la tâche Tsk_A est revenue au niveau privilégié Priv. Cela peut par exemple correspondre au cas où la tâche Tsk_B est redevenue active, par exemple suite à la fin du traitement de la tâche Tsk_A.

Ainsi, les niveaux de droits d'accès Priv, NPriv des tâches modifiées Tsk_A, Tsk_B ont été modifiés dans l'unité de gestion des droits d'accès MPU/MMU ainsi que les conditions d'accès à la mémoire contrôlées par le pare-feu FWL, et ainsi que les attributs P, NP des emplacements de la mémoire cache CCH contenant des données d'exécution relatives auxdites tâches modifiées Tsk_A, Tsk_B.

Et avantageusement, les données d'exécution contenues dans les emplacements mémoire relatifs à la tâche Tsk_B qui ont été conservés n'ont pas besoin d'être rechargés depuis la mémoire MEM. Un seul emplacement mémoire a été déplacé vers la mémoire MEM par une éviction de ligne de cache FLSH (figure 2C), et seules les données d'exécution contenues dans cette emplacement mémoire doivent être rechargés. Les performances du microcontrôleur MCU sont en conséquence améliorées.

Lors des changements de niveau de droit d'accès aux état 220, 240 (figures 2B, 2D), les emplacements de la mémoire cache CCH pour lesquelles les attributs P, NP sont être modifiés, peuvent par exemple être sélectionné par leurs adresse et leur taille, ou avantageusement au moyen d'un identificateur relatif à chaque tâche Tsk_A, Tsk_B, Tsk_C. Un tel identificateur peut par exemple être l'« ASID » (pour « Address Space Identifier » en anglais) servant classiquement à des opérations de gestion de la mémoire cache classiques, telles que les évictions d'emplacements mémoire ou les invalidations de données, pour distinguer des emplacements mémoire ayant une même adresse virtuelle.

En d'autres termes, il est avantageusement proposé d'identifier les emplacements de la mémoire cache CCH contenant des données d'exécution relatives aux tâches Tsk_A, Tsk_B dont les droits d'accès sont modifiés, en utilisant l'identificateur « ASID » relatif à chacune desdites tâches Tsk_A, Tsk_B. Cette identification permet ainsi efficacement de modifier les attributs P, NP desdits emplacements de la mémoire cache CCH et de conserver les données d'exécution contenues dans lesdits emplacements de la mémoire cache CCH.

Par ailleurs, seule une tâche du niveau de droit d'accès hiérarchiquement supérieure, dans cet exemple le niveau privilégié Priv, peut commander une modification des droits d'accès du microcontrôleur MCU (ou microprocesseur), et en particulier la modification ou l'actualisation des attributs des emplacements de la mémoire cache CCH.

Les figures 3A et 3B illustre un autre exemple de microcontrôleur MCU, en particulier une application de la gestion des droits d'accès décrite précédemment en relation avec les figures 2A à 2D à un autre type de droits d'accès Sec, NSec.

Dans cet exemple, les droits d'accès des tâches logicielles comprennent un niveau sécurisé Sec et un niveau non-sécurisé NSec. Les droits d'accès sécurisé Sec et non-sécurisé NSec correspondent à une séparation physique d'éléments matériels du microcontrôleur MCU de niveau sécurisé et de niveau non-sécurisés. Les éléments matériels de niveau sécurisé sont généralement prévus pour mettre en œuvre des fonctions critiques de sécurités, telles que des chiffrements et des déchiffrements utilisant des clés secrètes.

Une tâche de niveau non-sécurisé NSec ne peut pas accéder à des données ou des fonctions respectivement contenues ou mises en œuvre par un élément matériel de niveau sécurisé Sec.

Dans cet exemple de microcontrôleur MCU, l'unité de gestion des droits d'accès SAU/MMU comporte une unité d'attribution de sécurité « SAU » ou, en alternative, une unité de gestion de mémoire « MMU ».

En pratique, les unités de protection de la mémoire « MPU » (figures 2A-2D) et les unités d'attribution de sécurité « SAU » sont typiquement adaptées pour des circuits intégrés de microcontrôleurs ; tandis que les unités de gestion de mémoires « MMU », capables à la fois d'assurer la fonction d'une unité de protection de la mémoire « MPU » et la fonction d'une unité d'attribution de sécurité « SAU », sont typiquement adaptées pour des circuits intégrés de microprocesseurs.

La figure 3A représente un état 310 du fonctionnement du microcontrôleur MCU, dans lequel une tâche Tsk_A est de niveau sécurisé Sec, tandis qu'une tâche Tsk_B est de niveau non-sécurisé NSec. En outre, une région de mémoire partagée Dat_shrd est attribuée d'un droit d'accès de niveau non-sécurisé NSec. La région de mémoire partagée Dat_shrd est destinée à contenir des données partagées entre les tâches Tsk_A et Tsk_B. Eventuellement les données partagées peuvent incorporer une portion de code d'une tâche sécurisée, cette portion de code ayant des droits d'accès de niveau non-sécurisé.

Les données d'exécution correspondantes sont enregistrées dans des emplacements de la mémoire cache CCH ayant les attributs S, NS correspondants aux droits d'accès Sec, NSec des tâches respectives.

La figure 3B représente un état 320 du microcontrôleur MCU faisant suite à une modification des droits d'accès Sec, NSec des tâches logicielles. Plus particulièrement, la région de mémoire partagée Dat_shrd est passée au niveau sécurisé Sec.

Ainsi, les niveaux de droits d'accès des tâches et région de mémoire Dat_shrd ont été modifiés dans l'unité de gestion des droits d'accès SAU/MMU ainsi que les conditions d'accès à la mémoire contrôlées par le pare-feu FWL, et ainsi que les attributs S, NS des emplacements de la mémoire cache CCH contenant des données d'exécution relatives à ladite région de mémoire modifiée Dat_shrd.

Par conséquent, à partir de l'état 320, les données relatives aux données partagées Dat_shrd contenues dans les emplacements de la mémoire cache CCH ne sont pas perdues d'une part. D'autre part, en cas d'éviction d'au moins une de ces emplacements mémoire, les données de la mémoire cache CCH peuvent être enregistrées dans la région dédiée Dat_shrd de la mémoire MEM sans être bloquées par le pare-feu FWL, étant donné que leurs attributs S ont été modifiées et sont alignés avec la modification des conditions du pare-feu FWL.

La gestion des droits d'accès permet de passer d'un mode à l'autre (mode sécurisé et mode non-sécurisé) plus rapidement, avec moins de chargement et rechargement des données de la mémoire cache vers la mémoire MEM.

Par ailleurs, on notera que le microcontrôleur MCU peut prévoir à la fois des droits d'accès de niveaux sécurisé Sec et non-sécurisé NSec, ainsi que, pour chaque domaine matériel de niveau sécurisé et non-sécurisé, des droits d'accès de niveaux privilégié Priv et non-privilégié NPriv.

Ainsi, l'exemple des figures 3A et 3B peut être combiné à l'exemple des figures 2A à 2D. D'un autre point de vue, l'exemple des figures 2A à 2D peut correspondre à une application de la gestion des droits d'accès privilégiés Priv et non-privilégiés NPriv dans l'un ou l'autre du domaine sécurisé Sec ou du domaine non-sécurisé NSec de l'exemple des figures 3A et 3B.

Par ailleurs, dans les exemples décrits ci-avant en relation avec les figures 2A à 2D et 3A et 3B, la mémoire MEM peut être une mémoire externe ou interne au circuit intégré de microcontrôleur MCU ou de microprocesseur, du type mémoire vive, telle qu'une mémoire « RAM » pour « Random Acces Memory », ou du type non-volatile, telle qu'une mémoire « Flash ».

Et par ailleurs, là encore, seule une tâche du niveau de droit d'accès hiérarchiquement supérieure, dans cet exemple le niveau sécurisé Sec, peut commander une modification des droits d'accès du microcontrôleur MCU (ou microprocesseur), et en particulier la modification ou l'actualisation des attributs des emplacements de la mémoire cache CCH.

D'autre part, on notera que la description donnée ci-avant en relation avec les figures 2A-2D et 3A-3B correspond à un cas d'usage d'un système de microcontrôleur ou de microprocesseur « complet » en pratique, articulé en relation avec l'aptitude avantageuse de la mémoire cache CCH de pouvoir effectuer une modification d'au moins un attribut P, NP, S, NS sans modifier le contenu de l'emplacement de mémoire cache correspondant.

En outre, il existe des dispositifs de mémoire cache CCH externes, c'est-à-dire non incorporés dans le circuit intégré de microcontrôleur ou de microprocesseur.

Ainsi, on considérera aussi de façon isolée le dispositif de mémoire cache CCH , destiné être commandé par une unité de traitement CPU, comprenant des emplacements mémoire configurés pour avoir chacun un attribut P, NP ; S, NS représentatif d'un niveau de droit d'accès Priv, NPriv ; Sec, NSec du contenu de l'emplacement mémoire respectif, le dispositif de mémoire cache CCH étant capable, sur commande de l'unité de traitement CPU, d'effectuer une modification d'au moins un attribut P, NP ; S, NS sans modifier le contenu de l'emplacement mémoire correspondant.

Les exemples de réalisation données ci-avant en relation avec les figures 2A-2D et 3A-3B, en particulier concernant les niveaux de droit d'accès privilégié/non-privilégié et sécurisé/non-sécurisé, s'appliquent bien entendu au dispositif isolé de mémoire cache CCH.

La figure 4 illustre un exemple avantageux de mise en œuvre du processus d'actualisation des droits 400, en cas de modification des droits d'accès Priv, NPriv ; Sec, NSec d'au moins une tâche, dans un microcontrôleur tel que décrit précédemment en relation avec les figures 2A à 2D et 3A et 3B. Il sera fait référence aux éléments décrits précédemment en relation avec les figures 2A à 3B.

Le processus 400 comprend d'abord une étape 402 de désactivation des interruptions de l'unité de traitement CPU.

Ainsi, des interruptions de l'unité de traitement CPU éventuellement reçues pendant le processus 400, ne seront pas traitées en priorité. En conséquence, les exécutions des interruptions ne modifieront pas la mémoire cache CCH, ni plus particulièrement ne commanderont des évictions des emplacements de la mémoire cache CCH au cours du processus 400.

Le processus 400 comprend en outre une étape 404 de verrouillage des emplacements de la mémoire cache contenant les données d'exécution relatives à la ou les tâche(s) dont les droits d'accès sont modifiés. Le verrouillage des emplacements de la mémoire cache correspond à une interdiction de modifier ces emplacements mémoire.

Ensuite, le processus 400 comprend une étape 406 de modification des attributs P, NP ; S, NS des emplacements de la mémoire cache CCH, qui contiennent des données d'exécution relatives à ladite au moins une tâche dont les droits d'accès sont modifiés. Les données d'exécution contenues dans lesdits emplacements de la mémoire cache sont conservées.

Le pare-feu FWL et l'unité de gestion des droits d'accès MPU/MMU sont reprogrammés lors d'une étape 408.

Les attributs des emplacements de la mémoire cache CCH, les conditions d'accès à la mémoire MEM du pare-feu FWL, et les droits d'accès de l'unité de gestion des droits d'accès MPU/MMU sont alors tous alignés, c'est-à-dire tous cohérents.

Les emplacements de la mémoire cache CCH verrouillés à l'étape 404 peuvent alors être déverrouillés à une étape 410.

Le verrouillage 404 avant la modification 406 des attributs et le déverrouillage 410 après la modification des attributs permet de se prémunir d'éventuelles évictions d'emplacement de la mémoire cache CCH par la mise en œuvre du processus 400 lui-même.

Enfin, les interruptions de l'unité de traitement CPU sont réactivées à une étape finale 412 du processus 400.

Il est tolérable de désactiver les interruptions pendant tout le processus 400, étant donné la simplicité de mise en œuvre et donc la rapidité d'exécution dudit processus 400.

## Revendications

1. Procédé de gestion de droits d'accès de tâches logicielles (Tsk_A, Tsk_B, Tsk_C) exécutées par une unité de traitement (CPU) utilisant une mémoire cache (CCH) pour contenir des données d'exécution desdites tâches dans des emplacements mémoire ayant chacun un attribut (P, NP ; S, NS) représentatif du niveau de droit d'accès (Priv, NPriv ; Sec, NSec) de la tâche respective, le procédé comprenant, en cas de modification des droits d'accès (Priv, NPriv ; Sec, NSec) d'au moins une tâche (Tsk_B), un processus d'actualisation des droits (220 ; 320 ; 400) mis en œuvre par l'unité de traitement (CPU), comprenant une modification des attributs (P, NP ; S, NS) des emplacements de la mémoire cache (CCH) contenant des données d'exécution relatives à ladite au moins une tâche (Tsk_B) et une conservation des données d'exécution contenues dans lesdits emplacements de la mémoire cache (CCH).

2. Procédé selon la revendication 1, dans lequel les droits d'accès (Priv, NPriv ; Sec, NSec) des tâches logicielles sont définis par une unité de gestion des droits d'accès (MPU/MMU ; SAU/MMU).

3. Procédé selon l'une des revendications 1 ou 2, dans lequel un mécanisme de pare-feu (FWL) contrôle un accès à une mémoire (MEM) contenant des données (Dat_A, Dat_B, Dat_C, Dat_shrd) relatives aux tâches logicielles (Tsk_A, Tsk_B, Tsk_C) de façon conditionnée sur les droits d'accès desdites tâches logicielles, le procédé comprenant, en cas de modification des droits d'accès (Priv, NPriv ; Sec, NSec) d'au moins une tâche (Tsk_B ; Dat_shrd), une modification des conditions de l'accès aux données (Dat_B ; Dat_shrd) relatives à ladite au moins une tâche (Tsk_B ; Dat_shrd) du mécanisme de pare-feu, suivant ladite modification des droits d'accès.

4. Procédé selon l'une des revendications précédentes, dans lequel les droits d'accès des tâches logicielles comprennent un niveau privilégié et un niveau non-privilégié (Priv, NPriv), de sorte qu'une tâche de niveau non-privilégié (NPriv) ne peut pas accéder à des données ou des fonctions de niveau privilégié (Priv).

5. Procédé selon l'une des revendications précédentes, dans lequel les droits d'accès des tâches logicielles comprennent un niveau sécurisé et un niveau non-sécurisé (Sec, NSec), de sorte qu'une tâche de niveau non-sécurisé (NSec) ne peut pas accéder à des données ou des fonctions respectivement contenues ou mises en œuvre par un élément matériel de niveau sécurisé (Sec).

6. Procédé selon l'une des revendications précédentes, dans lequel le processus d'actualisation des droits (400) comprend en outre un verrouillage (404) des emplacements de la mémoire cache contenant les données d'exécution relatives à ladite au moins une tâche (Tsk_B), avant ladite modification des attributs respectifs (406), et un déverrouillage (410) après ladite modification des attributs (406).

7. Procédé selon l'une des revendications précédentes, dans lequel le processus d'actualisation des droits (400) comprend en outre une désactivation des interruptions de l'unité de traitement (402-421) pendant tout le processus d'actualisation (400).

8. Procédé selon l'une des revendications précédentes, dans lequel le processus d'actualisation des droits (220 ; 320 ; 400) ne peut être commandé que par une tâche, exécutée par l'unité de traitement, ayant un niveau de droit d'accès hiérarchiquement supérieur ou égal (Priv ; Sec) au niveau de droit d'accès représenté par l'attribut modifié.

9. Circuit intégré comportant une unité de traitement (CPU) configurée pour exécuter des tâches logicielles (Tsk_A, Tsk_B, Tsk_C), une mémoire cache (CCH) configurée pour contenir des données d'exécution desdites tâches logicielles dans des emplacements mémoire ayant chacun un attribut (P, NP ; S, NS) représentatif d'un niveau de droit d'accès (Priv, NPriv ; Sec, NSec) de la tâche respective, dans lequel l'unité de traitement (CPU) est configurée, en cas de modification des droits d'accès d'au moins une tâche (Tsk_B), pour modifier les attributs (P, NP ; S, NS) des emplacements de la mémoire cache (CCH) contenant des données d'exécution relatives à ladite au moins une tâche (Tsk_B), et pour conserver les données d'exécution contenues dans ces emplacements de la mémoire cache (CCH).

10. Circuit intégré selon la revendication 9, comportant une unité de gestion de droits d'accès (MPU ; SAU/MMU) configurée pour définir les droits d'accès (Priv, NPriv ; Sec, NSec) des tâches logicielles (Tsk_A, Tsk_B, Tsk_C).

11. Circuit intégré selon l'une des revendications 9 ou 10, apte à coopérer avec un mécanisme de pare-feu (FWL) configuré pour contrôler un accès à une mémoire (MEM) destinée à contenir des données (Dat_A, Dat_B, Dat_C, Dat_shrd) relatives aux tâches logicielles (Tsk_A, Tsk_B, Tsk_C), de façon conditionnée sur les droits d'accès desdites tâches logicielles, l'unité de traitement étant configurée, en cas de modification des droits d'accès (Priv, NPriv ; Sec, NSec) d'au moins une tâche (Tsk_B, Dat_shrd), pour modifier les conditions de l'accès aux données (Dat_B ; Dat_shrd) relatives à ladite au moins une tâche (Tsk_B, Dat_shrd) du mécanisme de pare-feu (FWL), suivant ladite modification.

12. Circuit intégré selon l'une des revendications 9 à 11, dans lequel les droits d'accès des tâches logicielles comprennent un niveau privilégié et un niveau non-privilégié (Priv, NPriv), l'unité de traitement (CPU) étant configurée de sorte qu'une tâche de niveau non-privilégié (NPriv) ne peut pas accéder à des données ou des fonctions de niveau privilégié (Priv).

13. Circuit intégré selon l'une des revendications 9 à 12, comprenant des éléments matériels de niveau sécurisé (Sec) et des éléments matériels de niveau non-sécurisé (NSec), dans lequel les droits d'accès des tâches logicielles comprennent un niveau sécurisé (Sec) et un niveau non-sécurisé (NSec), et l'unité de traitement (CU) est configurée de sorte qu'une tâche de niveau non-sécurisé (NSec) ne peut pas accéder à des données ou des fonctions respectivement contenues ou mises en œuvre par un élément matériel de niveau sécurisé (Sec).

14. Circuit intégré selon l'une des revendications 9 à 13, dans lequel l'unité de traitement (CPU) est en outre configurée pour verrouiller (404) les emplacements de la mémoire cache contenant les données d'exécution relatives à ladite au moins une tâche, avant ladite modification des attributs respectifs (406), et pour les déverrouiller (410) après ladite modification des attributs (406).

15. Circuit intégré selon l'une des revendications 9 à 14, dans lequel l'unité de traitement (CPU) est en outre configurée pour désactiver les interruptions (402, 412) de l'unité de traitement (CPU) pendant la modification des attributs des emplacements de la mémoire cache (400).

16. Circuit intégré selon l'une des revendications 9 à 15, dans lequel l'unité de traitement (CPU) est configurée de sorte que ladite modification des droits d'accès d'au moins une tâche (Tsk_B), ne peut être commandée que par une tâche, exécutée par l'unité de traitement, ayant un niveau de droit d'accès hiérarchiquement supérieur ou égal (Priv ; Sec) au niveau de droit d'accès représenté par l'attribut modifié.

17. Processus d'actualisation d'au moins un attribut (P, NP ; S, NS) représentatif d'un niveau de droit d'accès (Priv, NPriv ; Sec, NSec) d'un contenu d'un emplacement mémoire respectif d'une mémoire cache (CCH), comprenant, sur commande d'une unité de traitement (CPU), une modification d'au moins un attribut (P, NP ; S, NS), sans modifier le contenu de l'emplacement mémoire correspondant.

18. Dispositif de mémoire cache (CCH), destiné être commandé par une unité de traitement (CPU), comprenant des emplacements mémoire configurés pour avoir chacun un attribut (P, NP ; S, NS) représentatif d'un niveau de droit d'accès (Priv, NPriv ; Sec, NSec) du contenu de l'emplacement mémoire respectif, la mémoire cache (CCH) étant capable, sur commande de l'unité de traitement (CPU), d'effectuer une modification d'au moins un attribut (P, NP ; S, NS) sans modifier le contenu de l'emplacement mémoire correspondant.
